# EUROPÄISCHE PATENTANMELDUNG

(11) **EP 1 988 320 A2**
(43) Veröffentlichungstag der Anmeldung: **05.11.2008**
(21) Anmeldenummer: 08006587.3
(22) Anmeldetag: 31.03.2008
(51) Int. Cl.: F16L 27/11

(54) **Schwingungsisolierendes Zwischenbauteil**

(30) Priorität: 18.04.2007 DE 102007018292
(71) Anmelder: Pfeiffer Vacuum GmbH, 35614 Asslar (DE)
(72) Erfinder: Hoffmann, Jörg, 97204 Höchsberg (DE); Pankoke, Steffen, Dr., 97837 Erlenbach (DE)

(57) **Zusammenfassung**

Die Erfindung betrifft ein schwingungsreduzierendes Zwischenbauteil mit einem ersten (I) und einem zweiten (2; 2') Verbindungsflansch und einem zwischen den Verbindungsflanschen angeordneten Wellbalg (3). Um die Schwingungsreduzierung zu erhöhen, schlägt die Erfindung vor, den Wellbalg so zu gestalten, dass die axiale Steifigkeit derart bemessen ist, dass er alleine die Verbindungsflansche gegen den Druckunterschied von Atmosphäre zu Hochvakuum von einander abstützt.

## Beschreibung

Die Erfindung betrifft ein schwingungsisolierendes Zwischenbauteil mit einem ersten und einem zweiten Verbindungsflansch.

Schwingungsisolierende Zwischenbauteile sind in vielen Anwendungen notwendig, in denen die wechselseitige Übertragung von Schwingungen zweier Baugruppen soweit wie möglich reduziert werden sollen.

Dies ist beispielsweise in Anwendungen der Vakuumtechnik gegeben. Gegen Schwingungen hochempflindliche Baugruppen, wie beispielsweise evakuierte Bauelemente von Elektronenmikroskopen, müssen gegen Schwingungen geschützt werden, die durch die Vakuumerzeugung entstehen. Zur Vakuumerzeugung werden beispielsweise Turbomolekularvakuumpumpen verwendet.

Der umgekehrte Fall tritt auch auf: In einer Vakuumkammer entstehen Schwingungen, die von der Vakuumpumpe ferngehalten werden sollen. Erhält die Vakuumpumpe zu starke Schwingungen, können bspw. die Lager des schnelldrehenden Rotors vorzeitig geschädigt werden, so dass häufige Lagerwechsel die Folge sind.

Eine Vielzahl von Lösungen sind im Stand der Technik bekannt. Ausgangspunkt sind in der Regel zwei Flansche, welche mit Baugruppen verbindbar sind, und zwischen denen ein Wellbalg und ein Dämpfungsglied angeordnet sind. Bei diesem handelt es sich beispielsweise im einfachsten Fall um einen zylindrischen Elastomerkörper, dessen Stirnflächen an den Flanschen befestigt sind und in dessem Inneren der Wellbalg vorgesehen ist. Weiterbildungen dieses Zwischenbauteils sind im Stand der Technik bekannt. Beispielsweise befasst sich das deutsche Gebrauchsmuster DE 7805710 U1 mit der Ausgestaltung des Dämpfungsglieds.

Es wird beobachtet, dass diese schwingungsreduzierenden Bauteile nicht in der Lage sind, den heutigen Anforderungen zu genügen. Die von einem zum anderen Flansch übertragenen Schwingungsamplituden sind zu groß.

Die Verwendung von Elastomeren hat gravierende Nachteile: Elastomere altern, d.h. ihre elastischen Eigenschaften sind nicht über einen langen Zeitraum konstant. Zudem ist ihr Betriebsverhalten von den Umgebungsbedingungen abhängig, beispielsweise von der Temperatur. Durch Fließen verändern sie ihre Form, damit aber auch die Eigenschaften bei der Übertragung von Schwingungen.

Der Erfindung lag die Aufgabe zugrunde, die Übertragungscharakteristik für Schwingungen zu verbessern, die Haltbarkeit zu erhöhen und dabei einen kostengünstigeren Aufbau zu erzielen.

Gelöst wird diese Aufgabe durch ein schwingungsisolierendes Zwischenbauteil nach Anspruch 1 und ein Vakuumsystem nach Anspruch 9. Die abhängigen Ansprüche 2 bis 8 stellen vorteilhafte Weiterbildungen dar.

Ein schwingungsisolierendes Zwischenbauteil, welches einen Wellbalg aufweist, dessen axiale Steifigkeit derart bemessen ist, dass er alleine die Verbindungsflansche gegen den Atmosphärendruck abstützen kann, benötigt keine Elastomere als tragende Bauteile. Dadurch werden die oben genannten Nachteile der Elastomere vermieden. Die Steifigkeit des Wellbalgs selbst liegt in einem erfindungsgemäßen Zwischenbauteil höher als im Stand der Technik, jedoch deutlich unter den Steifigkeiten der Kombination aus Elastomer und Wellbalg. Dadurch werden wesentlich geringe Schwingungsamplituden übertragen. Das Weglassen des Elastomers verbessert auch den Frequenzgang des Zwischenbauteils erheblich, da die Eigenfrequenz abgesenkt wird. Das Zwischenbauteil wird deutlich oberhalb seiner Eigenfrequenz betrieben, weshalb ein Absenken der Eigenfrequenz die überkritische Isolationswirkung verstärkt. Ein weiterer Vorteil ist, dass durch Weglassen des Elastomers die Dämpfung auf ein Minimum reduziert wird und so in der Folge die durch die Dämpfung entstehenden Reaktionskräfte minimiert werden. Weglassen des Elastomerkörpers bewirkt außerdem, dass das Schwingungsübertragungsverhalten nicht nur in axialer sondern auch in angularer und lateraler Richtung deutlich verbessert ist. Die laterale Richtung bezeichnet dabei eine Parallelverschiebung der Verbindungsflansche gegeneinander. Angular bedeutet eine Verkippung der Verbindungsflansche.

Die vorteilhaften Eigenschaften des erfindungsgemäßen Zwischenbauteils kommen besonders in einem Vakuumsystem zur Geltung, in welchem es zwischen einer zu evakuierende Vakuumkammer und einer Vakuumpumpe angeordnet ist. In einem solchen Vakuumsystem herrscht zwischen dem Inneren und dem Äußeren des Zwischenbauteils ein starkes Druckgefälle, zudem sind gegenseitige Übertragungen von Schwingungen zwischen Vakuumkammer und Vakuumpumpe zu reduzieren. Gerade bei Vakuumpumpen mit schnelldrehendem Rotor werden durch die Erfindung günstige Verhältnisse der Eigenfrequenzen der Vakuumpumpe und des Zwischenbauteils erreicht.

In einer Weiterbildung ist eine Zusatzmasse am schwingungsreduzierenden Zwischenbauteil angeordnet. Dies verstärkt die Reduzierung der Eigenfrequenz des Zwischenbauteils. Da Frequenzen oberhalb der Eigenfrequenz besonders schlecht übertragen werden, wird durch die Zusatzmasse erreicht, dass nur noch wenige, tiefe und damit unkritische Frequenzen nennenswert übertragen werden.

Eine andere Weiterbildung schlägt vor, diese Zusatzmasse an einem der Verbindungsflansche anzuordnen. Dies ist konstruktiv besonders einfach zu lösen, die Anzahl zusätzlicher Bauteile wird so klein wie möglich gehalten.

Diese Weiterbildungen lassen sich weiterhin verbessern, indem die Zusatzmasse lösbar an dem Verbindungsflansch befestigt ist. Dies ermöglicht beispielsweise den Austausch einer Zusatzmasse gegen eine andere und somit die Anpassung des Zwischenbauteils an unterschiedliche Verhältnisse. Solche Verhältnisse können beispielsweise durch verschiedene Eigenfrequenzen an unterschiedlichen Rezipienten entstehen.

Eine andere Weiterbildung schlägt vor, in wenigstens einer Welle des Wellbalgs einen Elastomerkörper anzuordnen. Der Elastomerkörper entfaltet dabei keine tragende Wirkung. Seine Aufgabe ist es, die Eigenfrequenzen des Wellbalgs zu bedämpfen. In einer Weiterbildung umfasst dieser Elastomerkörper geschäumtes Material. Dieses weist eine sehr geringe Steifigkeit auf, so dass die Steifigkeit des schwingungsisolierenden Zwischenbauteils nur sehr gering beeinflusst wird.

Eine Weiterbildung dieses Gedanken ist, einen elastomeren Rundschnurring in der Welle anzuordnen. Dies ist besonders kosten- und montagegünstig.

Eine weitere vorteilhafte Weiterbildung ist die Verwendung eines Wellbalges, der aus mehreren ineinander verpressten Lagen besteht. Diese haben den Vorteil, dass sie aufgrund interner Reibung zwischen den einzelnen Lagen wirkungsvoll die Eigenfrequenzen des Wellbalgs bedämpfen.

Eine andere Weiterbildung bezieht sich auf die Stirnfläche eines Verbindungsflansches. Die Dichtfläche, die mit der Dichtfläche eines an den Flansch angeschlossen Bauteils in Berührung kommt, ist als Ausnehmung gestaltet. Das meint, sie wird durch eine zurückstehende Fläche gebildet. Dies bewirkt, dass die Dichtfläche bei Abstellen des Zwischenbauteils auf eine Fläche, beispielsweise eine Arbeitsplatte, nicht mit dieser in Berührung kommt. Mechanische Beeinträchtigungen wie Zerkratzen werden dadurch vermieden, die Dichtheit bleibt erhalten.

Anhand von Ausführungsbeispielen soll die Erfindung näher erläutert werden. Weitere Vorteile werden ebenfalls aufgezeigt. Es zeigen:
- Fig. 1:: Schnitt durch ein schwingungsreduzierendem Zwischenbauteil in einem ersten Ausführungsbeispiel.
- Fig. 2:: Schnitt durch ein schwingungsreduzierendem Zwischenbauteil in einem zweiten Ausführungsbeispiel.
- Fig. 3:: Vakuumsystem mit Zwischenbauteil.

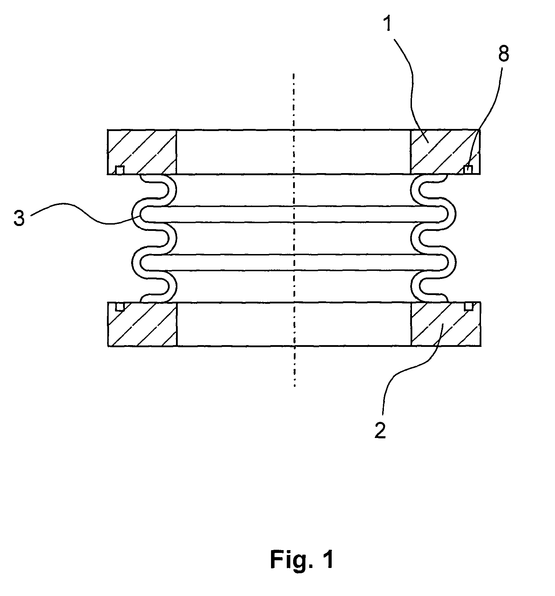

Die erste Abbildung Fig. 1 zeigt ein erstes Ausführungsbeispiel eines erfindungsgemäßen Zwischenbauteils. Dieses weist einen ersten Verbindungsflansch 1 und einen zweiten Verbindungsflansch 2 auf. Über diese Verbindungsflansche ist das Zwischenbauteil lösbar mit anderen, ebenfalls Verbindungsflansch aufweisenden Bauteilen verbunden, z.B. einer Vakuumpumpe und einer Vakuumkammer. Die Verbindungsflansche weisen je eine Rille 8 auf. In diese Rillen können im Stand der Technik bekannte Spannklammern eingreifen. Alternativ zur Rille können auch andere im Stand der Technik bekannte und gegebenenfalls auch genormte Flanschgeometrien und Verbindungsmittel Anwendung finden, beispielsweise gebohrte Flansche, durch die Schrauben greifen. Zwischen den Verbindungsflanschen 1 und 2 ist ein Wellbalg 3 angeordnet. Dessen axiale Steifigkeit ist so bemessen, dass er alleine die Verbindungsflansche gegen den Druckunterschied von Atmosphäre zu Hochvakuum voneinander abstützt. Diese axiale Steifigkeit kann auf verschiedenen Wegen erreicht werden. In die axiale Steifigkeit geht beispielsweise die Materialwahl für den Wellbalg ein. Als Material wird in der Vakuumtechnik ein vakuum- und korrosionsbeständiges Metall verwendet, beispielsweise ein Edelstahl. Dessen die Steifigkeit beeinflussender Elastizitätsmodul liegt fest, so dass die Steifigkeit über geometrische Größen des Wellbalges eingestellt werden kann. Diese geometrischen Größen sind im wesentlichen die Materialstärke, die Tiefe der einzelnen Wellen, die Wellenanzahl, der Außendurchmesser und bei einem mehrlagigen Wellbalg zusätzlich noch die Wandzahl. Beispielsweise bewirkt die Erhöhung der Wellenanzahl eine Herabsetzung der Steifigkeit. Allerdings geht mit dieser Maßnahme eine Vergößerung der Baulänge einher, so dass der Leitwert des Zwischenbauteils für Gase herabsinkt. Das effektive Saugvermögen einer über das Zwischenbauteil an eine Vakuumkammer angeschlossene Vakuumpumpe sinkt damit. Dies kann nicht in allen Anwendungen toleriert werden, so dass eine der anderen geometrischen Größen geändert werden muss, beispielsweise die Wandstärke oder die Wellentiefe. Eine Erhöhung der Wandstärke führt zu einer Erhöhung der Steifigkeit, während eine tiefere Ausgestaltung der Wellen die Steifigkeit herabsetzt. Eine mehrlagige Ausführung des Wellbalges ergibt eine größere Wandzahl. Mit der Wandzahl nimmt die Steifigkeit zu. Insgesamt muss ein Kompromiss für alle geometrischen Größen gefunden werden, der zum Ziel hat, die Steifigkeit einerseits so niedrig wie möglich und andererseits so hoch zu wählen, dass der Wellbalg die Verbindungsflansche gegen den Druckunterschied von Atmosphäre zu Hochvakuum voneinander abstützt.

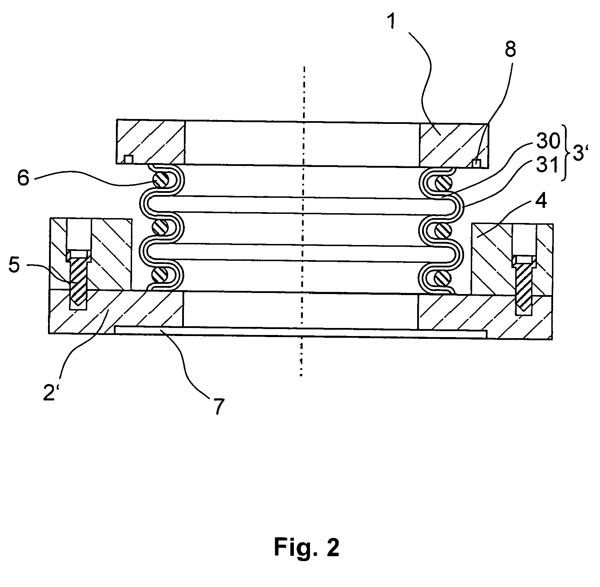

Ein zweites Ausführungsbeispiel gibt Fig. 2 an. Der zweite Verbindungsflansch 2' ist gegenüber dem ersten Ausführungsbeispiel so gestaltet, dass er eine Zusatzmasse 4 tragen kann. Diese Zusatzmasse kann beispielsweise eine Vergößerung des Durchmessers bedingen. Die Zusatzmasse ist mit Verbindungsmitteln, im Beispiel Schrauben 5, mit dem Verbindungsflansch verbunden. Von Vorteil ist es, die Verbindung lösbar zu gestalten, so dass die Zusatzmasse ausgetauscht werden kann. Die Zusatzmasse kann als einstückiger Ring, als ein Ringsegment oder als eine Mehrzahl von Zusatzmassen ausgestaltet sein. Kostengünstig ist es, diese Zusatzmasse als Gussteil auszuführen. Ein Material hoher Dichte ist von Vorteil. Stahl ist aufgrund seiner Haltbarkeit und Dichte ein günstiges Material. Auf der Fläche des zweiten Verbindungsflansches ist eine Ausnehmung 7 vorgesehen. Ein mit diesem Verbindungsflansch verbundener Gegenflansch kommt mit der Fläche im Grund der Ausnehmung in Kontakt. Diese Fläche ist gerade in der Vakuumtechnik eine Dichtfläche. Mechanische Fehler in dieser Fläche führen zu Undichtigkeiten. Solche mechanischen Fehler treten nicht im eingebauten Zustand sondern bei Lagerung des Zwischenbauteils auf, insbesondere wenn es auf dieser Fläche abgestellt wird. Da die Fläche als Grundfläche der Ausnehmung gegeüber der Oberfläche des Verbindungsflansches zurückgesetzt ist, ist sie vor solcher mechanischer Zerstörung geschützt.

In diesem Beispiel umfasst der Wellbalg 3' die zwei Lagen 30 und 31. Die Lagen sind ineinander verpresst. Sobald der Wellbalg aus seiner Ruhestellung ausgelenkt wird, reiben diese Lagen aneinander. Dies führt zu einer wirkungsvollen Bedämpfung der Eigenfrequenzen des Wellbalgs.

In wenigstens einer der Wellen des Wellbalges ist ein Körper aus deformierbarem Material eingelegt. Dieser hat keine tragende Funktion sondern dient zur Dämpfung der Eigenfrequenzen des Wellbalges. In einer vorteilhaften Ausführung umfasst der Körper einen Elastomerkörper 6, beispielsweise ein Rundschnurring.

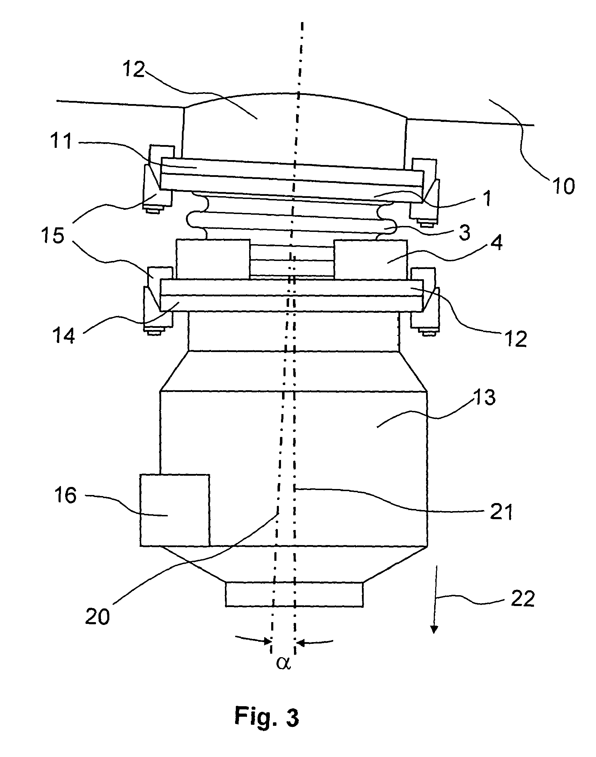

In Fig. 3 ist ein Ausführungsbeispiel eines Vakuumsystems gezeigt. Eine Vakuumkammer 10 weist einen Rohrabschnitt 12 auf, der in einem Rezipientenflansch 11 endet. Mit Verbindungsmitteln, beispielsweise Klammern 15, ist der erste Verbindungsflansch 1 eines Zwischenbauteils lösbar verbunden. Der zweite Verbindungsflansch 2 des Zwischenbauteils ist durch Klammern 15 mit einem Pumpenflansch 12 einer Vakuumpumpe 13, beispielsweise einer Turbomolekularpumpe verbunden. Das Zwischenbauteil ist so angeordnet, dass die Zusatzmasse 4 auf der Seite der Vakuumpumpe orientiert ist. Auf diese Weise bewirkt sie eine Erhöhung der auf der Seite der Vakuumpumpe am Zwischenbauteil befestigten Masse und damit eine Absenkung der Eigenfrequenz.

Die Vakuumpumpe ist ausschließlich über das Zwischenbauteil mit der Vakuumkammer verbunden, damit es keine Schwingungsübertragung über einen parallelen Weg geben kann.

Die Normale auf den Rezipientenflansch 11, die Rezipientenflanschachse 20, ist parallel oder in einem engen Winkelbereich zur Richtung der Schwerkraft 22 orientiert. Die Vakuumpumpe weist meist eine unsymetrische Massenverteilung auf. Dies wird im gezeigten Beispiel durch ein an der Außenseite angeordnetes Zubehör 16 verursacht.. Aufgrund dieser Massenverteilung hängt die Vakuumpumpe nicht exakt in Richtung der Schwerkraft. Ihre Symmetrieachse, die Pumpenachse 21, weicht um einen Winkel α davon ab. Diese Abweichung führt zu einer geringfügigen unsymetrischen Zusammenstauchung des Zwischenbauteils. Der Winkel zwischen Rezipientenflanschachse und der Richtung der Schwerkraft ist vorteilhaft so bemessen, dass die unsymetrische Zusammenstauchung keinen Verlust der Schwingfähigkeit verursacht.

## Patentansprüche

1. Schwingungsreduzierendes Zwischenbauteil mit einem ersten (1) und einem zweiten (2; 2') Verbindungsflansch und einem zwischen den Verbindungsflanschen angeordneten Wellbalg (3; 3'), welcher eine derart bemessene axiale Steifigkeit besitzt, dass er alleine die Verbindungsflansche gegen den Druckunterschied von Atmosphäre zu Hochvakuum von einander abstützt.

2. Schwingungsreduzierendes Zwischenbauteil nach Anspruch 1, **dadurch gekennzeichnet, dass** es eine Zusatzmasse (4) aufweist.

3. Schwingungsreduzierendes Zwischenbauteil nach Anspruch 2, **dadurch gekennzeichnet, dass** die Zusatzmasse (4) an einem der Verbindungsflansche (1, 2; 2') angeordnet ist.

4. Schwingungsreduzierendes Zwischenbauteil nach einem der Ansprüche 2 oder 3, **dadurch gekennzeichnet, dass** die Zusatzmasse (4) lösbar befestigt ist.

5. Schwingungsreduzierendes Zwischenbauteil nach einem der vorhergehenden Ansprüche, **dadurch gekennzeichnet, dass** ein Elastomerkörper (6) in wenigstens einer der Wellen angeordnet ist.

6. Schwingungsreduzierendes Zwischenbauteil nach Anspruch 5, **dadurch gekennzeichnet, dass** der Elastomerkörper (6) einen Rundschnurring umfasst.

7. Schwingungsreduzierendes Zwischenbauteil nach einem der vorhergehenden Ansprüche, **dadurch gekennzeichnet, dass** der Wellbalg mehrere Lagen aufweist.

8. Schwingungsreduzierendes Zwischenbauteil nach einem der vorhergehenden Ansprüche, **dadurch gekennzeichnet, dass** eine Dichtfläche wenigstens eines der Verbindungsflansche (1, 2; 2') als Ausnehmung (7) gestaltet ist.

9. Vakuumsystem mit einer Vakuumkammer (10), welche einen Rezipientenflansch (11) aufweist, einer Vakuumpumpe (13), inbesondere einer Turbomolekularvakuumpumpe, welche einen Pumpenflansch (14) aufweist, und einem schwingungsreduzierenden Zwischenbauteil mit einem ersten (1) und einem zweiten (2; 2') Verbindungsflansch und einem zwischen den Verbindungsflanschen angeordneten Wellbalg (3; 3'), welcher eine derart bemessene axiale Steifigkeit besitzt, dass er alleine die Verbindungsflansche gegen den Druckunterschied von Atmosphäre zu Hochvakuum von einander abstützt.
